# EUROPEAN PATENT SPECIFICATION

(11) **EP 3 737 199 B1**
(45) Date of publication and mention of the grant of the patent: **19.04.2023**
(21) Application number: 19172778.3
(22) Date of filing: 06.05.2019
(51) Int. Cl.: H04W 76/18

(54) **COMMUNICATION NETWORK COMPONENT AND METHOD FOR HANDLING A SERVICE REQUEST**
KOMMUNIKATIONSNETZWERKKOMPONENTE UND VERFAHREN ZUR HANDHABUNG EINER DIENSTANFRAGE
COMPOSANT DE RÉSEAU DE COMMUNICATION ET PROCÉDÉ DE GESTION D'UNE DEMANDE DE SERVICES

(43) Date of publication of application: 11.11.2020
(73) Proprietor: NTT DOCOMO, INC., Tokyo 100-6150 (JP)
(72) Inventor: SAMA, Malla Reddy, 80687 Munich (DE); THAKOLSRI, Srisakul, 80687 Munich (DE); GUERZONI, Riccardo, 80687 Munich (DE)
(74) Representative: Viering, Jentschura & Partner mbB Patent- und Rechtsanwälte

(56) References cited:
- NOKIA ET AL: "Use of a Create operation at the first contact from I-SMF/V-SMF to SMF/H-SMF", 3GPP DRAFT; S2-1903107 ETSUN 23502 CREATE-UPD V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Xian, P.R. China; 20190208 - 20190212 2 April 2019 (2019-04-02), XP051719274, Retrieved from the Internet: URL:http://www.3gpp.org/ftp/tsg%5Fsa/WG2%5 FArch/TSGS2%5F132%5FXiAn/Docs/S2%2D1903107 %2Ezip [retrieved on 2019-04-02]
- HUAWEI ET AL: "LADN PDU Session handling in ETSUN scenario", 3GPP DRAFT; S2-1903552_502_LADN HANDLING DURING MOBILITY PROCEDURES-V1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. Xi'an, China; 20190408 - 20190412 2 April 2019 (2019-04-02), XP051719700, Retrieved from the Internet: URL:http://www.3gpp.org/ftp/tsg%5Fsa/WG2%5 FArch/TSGS2%5F132%5FXiAn/Docs/S2%2D1903552 %2Ezip [retrieved on 2019-04-02]
- TENCENT: "AN Release for ETSUN", 3GPP DRAFT; S2-1903096 TS23.502 R16 ETSUN AN RELEASE FOR ETSUN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Xi'An, China; 20190408 - 20190412 2 April 2019 (2019-04-02), XP051719264, Retrieved from the Internet: URL:http://www.3gpp.org/ftp/tsg%5Fsa/WG2%5 FArch/TSGS2%5F132%5FXiAn/Docs/S2%2D1903096 %2Ezip [retrieved on 2019-04-02]
- CHINA MOBILE: "Procedure update for handover with I-SMF insertion", 3GPP DRAFT; S2-1903703 PROCEDURE UPDATE FOR HANDOVER WITH I-SMF INSERTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG2, no. Xi'an, China; 20190408 - 20190412 2 April 2019 (2019-04-02), XP051719849, Retrieved from the Internet: URL:http://www.3gpp.org/ftp/tsg%5Fsa/WG2%5 FArch/TSGS2%5F132%5FXiAn/Docs/S2%2D1903703 %2Ezip [retrieved on 2019-04-02]

## Description

The present disclosure relates to communication network components and methods for handling a service request.

According to recent 5G (Fifth Generation) standard developments of 3GPP (Third Generation Partnership Project) Release 16 (Rel-16), it is contemplated to support Local Area Data Networks (LADNs) as well as to provide Intermediate Session Management Functions (I-SMFs), e.g. for mobility support, in a mobile radio communication system. However, the combination of these features raises issues, for example in case a mobile terminal enters a part of an LADN Service area which is not served by an SMF but by an I-SMF.

Accordingly, approaches for handling service requests in such scenarios are desirable.

The Change requests
"Use of a Create operation at the first contact from I-SMF/V-SMF t SMF/H-SMF", by Nokia et al., 3GPP Draft, S2-1903107, 2019,
"LADN PDU Session handling in ETSUN scenario", by Huawei et al., 3GPP draft, S2-1903552, 2019,
"AN Release for ETSUN", by Tencent, 3GPP draft, S2-1903096, 2019 and
"Procedure update for handover with I-SMF insertion", by China Mobile, 3GPP draft, S2-1903703, 2019,
describe steps taken by the network when a PDU session is already established and the mobile terminal moves from the current service area, e.g. the service area of a service management function, SMF, to a new service area, e.g. the service area of an intermediary service management function, I-SMF.

According to one embodiment, a communication network component is described including a receiver configured to receive a request for a communication service of a local area data network from a mobile terminal, wherein the request is a request for establishment of a communication session and a controller request by sending a session establishment rejection to the mobile terminal configured to reject the request if the mobile terminal is located in a part of the local area data network that requires an intermediate session management function to serve the mobile terminal, wherein the local area data network comprises at least a part served by a session management function (205) and a part served by the intermediate session management function (213) to serve the mobile terminal (201).

According to a further embodiment, a method for handling a service request according to the above communication network component is provided.

In the drawings, like reference characters generally refer to the same parts throughout the different views. The drawings are not necessarily to scale, emphasis instead generally being placed upon illustrating the principles of the invention.

In the following description, various aspects are described with reference to the following drawings, in which:
- Figure 1: shows a radio communication system, e.g. a PLMN (Public Land Mobile Network).
- Figure 2: shows a radio communication system with an intermediate session management function.
- Figure 3: shows a registration area of a UE (user equipment).
- Figure 4: shows a registration area of a UE which includes the service area of an LADN (local area data network).
- Figure 5: shows a message flow diagram illustrating the handling of a PDU Session Establishment request according to an embodiment.
- Figure 6: shows a message flow diagram illustrating the handling of a PDU Session Establishment request according to another embodiment.
- Figure 7: shows communication network component according to an embodiment.
- Figure 8: shows a flow diagram illustrating a method for handling a communication request according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
According to an Example, the request is a request for establishment of a communication session, a request for modification of an established session, a request for a service by means of an established session or a request for serving the mobile terminal by a different radio cell.

According to one example, a method for handling a service request is provided comprising receiving a request for a communication service of a local area data network from a mobile terminal and rejecting the request by sending a session establishment rejection to the mobile terminal if the mobile terminal is located in a part of the local area data network that requires an intermediate session management function to serve the mobile terminal.

According to one example, the method comprises initiating providing the service to the mobile terminal if the mobile terminal is not located in a part of the local area data network that requires an intermediate session management function to serve the mobile terminal.

According to one example, the local area data network comprises at least a part served by a session management function and a part served by the intermediate session management function to serve the mobile terminal.

According to one example, the method comprises determining whether the mobile terminal is located in a part of the local area data network that requires an intermediate session management function to serve the mobile terminal.

According to one example, the method comprises determining whether the mobile terminal is located in a part of the local area data network that requires an intermediate session management function to serve the mobile terminal based on a service area of the session management function.

According to one example, the method is performed by the session management function or an access and mobility management function.

According to one example, the method is performed by an access and mobility management function and comprising rejecting the request in response to a rejection of the request by the session management function.

According to one example, the access and mobility management function receives a session management rejection reason from the session management function and the access and mobility management function determines a mobility management rejection reason and transmits it to the mobile terminal.

According to one example, the method is performed by an access and mobility management function and comprising transmitting the request to an intermediate session management function configured to serve the part of the local area data network that requires an intermediate session management function.

According to one example, the method is performed by an access and mobility management function and comprising determining whether the mobile terminal is located in a part of the local area data network that requires an intermediate session management function to serve the mobile terminal and rejecting the request in response to the determination by the determiner that the mobile terminal is located in a part of the local area data network that requires an intermediate session management function to serve the mobile terminal.

According to one example, the request is a request for establishment of a communication session, a request for modification of an established session, a request for a service by means of an established session or a request for serving the mobile terminal by a different radio cell.

According to one example, the method comprises transmitting a rejection cause to the mobile terminal if the mobile terminal is located in a part of the local area data network that requires an intermediate session management function to serve the mobile terminal.

According to one example, the rejection cause specifies that the mobile terminal is located in a session management function service area in which the local area data network is not available.

According to one example, the method comprises updating a configuration of the mobile terminal to exclude the local area data network from a list of available local area data networks if the mobile terminal is located in a part of the local area data network that requires an intermediate session management function to serve the mobile terminal.

It should be noted that one or more of the features of any of the examples above may be combined with any one of the other examples.

In the following, various examples will be described in more detail.

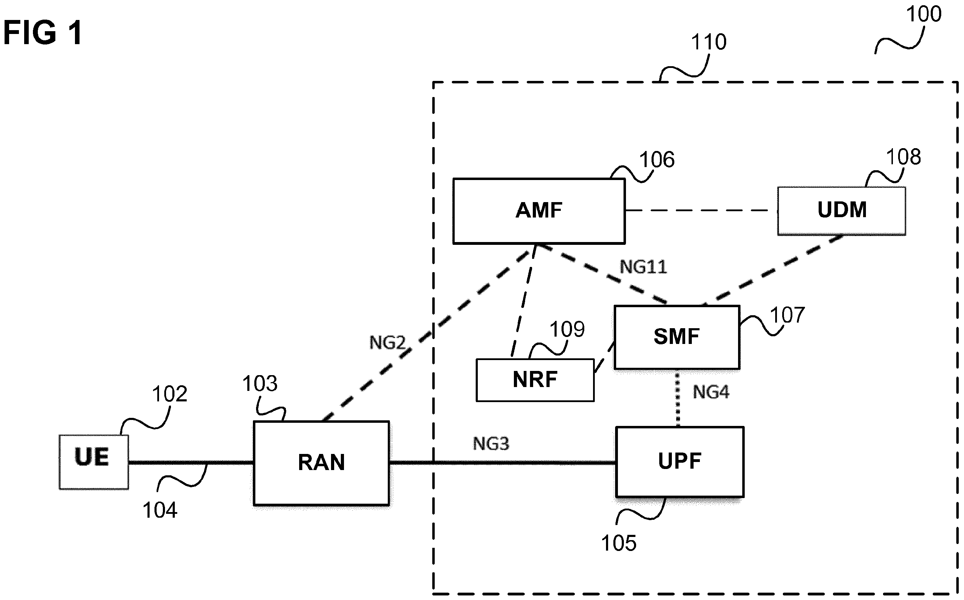

Figure 1 shows a radio communication system 100, e.g. a PLMN (Public Land Mobile Network).

The radio communication system 100 includes a radio communication terminal device 102 such as a UE (user equipment), a Nano Equipment (NE), and the like.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface 104. It should be noted that the radio access network 103 may include any number of radio access network nodes.

The radio communication system 100 may further include a core network 110 including a UPF (user plane function) 105, connected to the RAN 103, an Access and Mobility Management Function (AMF) 106 connected to the RAN 103, a Session Management Function (SMF) 107, a Unified Data Management (UDM) 108 and a Network Repository Function (NRF) 109.

It should be noted that for the various network functions (NFs) like the AMF 106 and the SMF 107, multiple instances may exist in the core network 110.

In the setup procedure for a Protocol Data Unit (PDU) session, the AMF 106 requests the SMF 107 to create a Session Management (SM) Context. The Create SM Context is a service exposed by the SMF 107 and is invoked by the AMF 106.

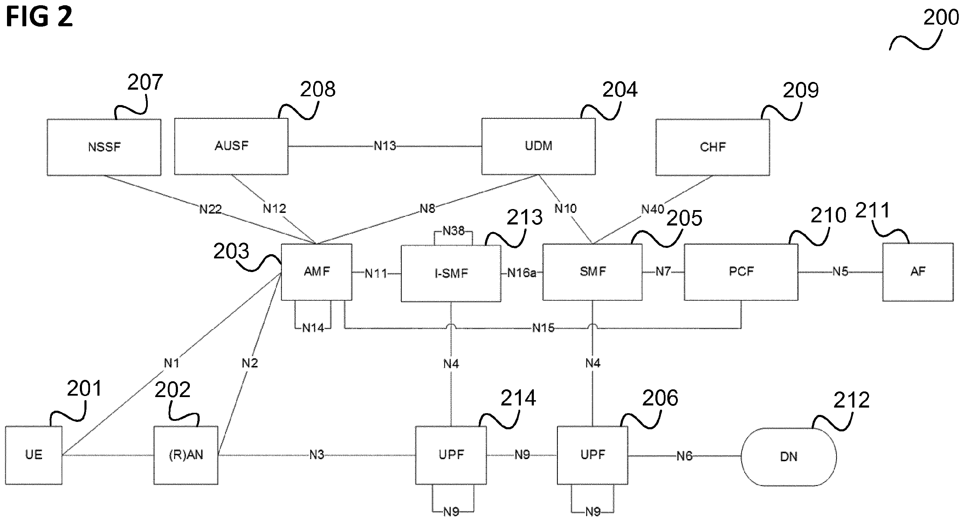

According to ETSUN (Enhancing Topology of SMF and UPF in 5G Networks) an I-SMF (intermediate session management function) may be inserted between an AMF and an SMF which may serve as an intermediate relay function (e.g. like a network switch)for a PDU session. This is illustrated in figure 2.

Figure 2 shows a radio communication system 200 with an intermediate session management function.

Similarly to the radio communication system of figure 1, the radio communication system 200 includes a UE 201, a RAN 202, an AMF 203, a UDM 204 and an SMF 205 with associated UPF 206. Further, radio communication system 200 includes an NSSF (Network Slice Selection Function) 207, an AUSF (Authentication Server Function) 208, a CHF (Charging Function) 209, a PCF (Policy Control Function) 210, an AF (Application Function) 211 and a DN (data network) 212. These components may also be included in the radio communication system 100 but are not shown in figure 1.

Additionally, the radio communication system 200 includes an I-SMF 213 and a further UPF 214 associated therewith. The I-SMF 213 has an N16a interface to the SMF 205.

The I-SMF 213 may be inserted for a PDU Session for the UE 201, e.g. during PDU Session establishment/Modification, Service Request Procedure or due to UE mobility. For example, the service area of the SMF 205 may not cover a region to which the UE 201 moves (or in which it is located) so the I-SMF 213 is inserted (e.g. upon PDU session establishment for the UE 201) having a service area covering the UE's location.

Moreover, according to 3GPP, a radio communication system may include local area data networks (LADNs).

The service area of an LADN the data network name of the LADN are configured in the AMF 203 on a per DN basis, i.e. for different UEs accessing the same LADN. The configured LADN service area may be independent from other factors like the UE's Registration Area or UE subscription or SMF(s) Service area.

LADN Information (i.e. LADN Service Area Information and LADN DNN (Data Network Name)) is provided by the AMF 203 to the UE 201 during the Registration procedure of the UE 201 or the UE Configuration Update procedure.

If a LADN is not available in any TA (tracking area) of an AMF's service area, the AMF 203 is not required to be configured with any LADN related information for that DNN or to provide such information to the UE. For each LADN DNN configured in the AMF 203, the corresponding LADN Service Area Information includes a set of Tracking Areas that belong to the Registration Area that the AMF 203 has assigned to the UE 201, i.e. the intersection of the LADN service area and the Registration Area assigned to the UE.

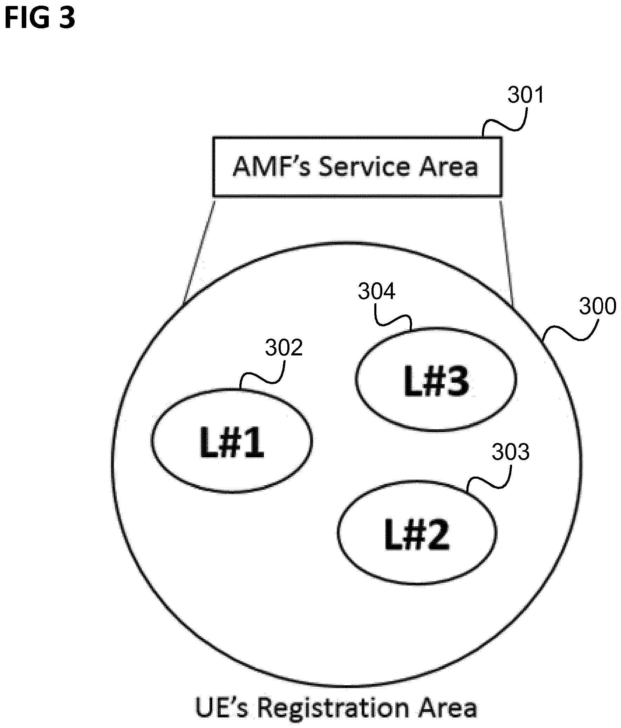

Figure 3 shows a registration area 300 of a UE, e.g. corresponding to UE 201.

The registration area 300 is part of the service area 301 of an AMF, e.g. corresponding to AMF 202. In this example, the registration area 300 includes the service areas 302, 303, 304 of three LADNs. This means that the service areas 302, 303, 304 in this example intersect with the UE's registration area 300.

It should be noted that according to 3GPP the AMF 203 shall not create (assign) the UE's Registration Area 300 based on the availability of LADNs.

The AMF 203 determines the LADN Service Area information based on the network configuration (in particular registration area and LADN service areas).

When receiving a PDU Session Establishment request with LADN DNN or Service Request for an established PDU Session corresponding to a LADN of a UE located in the LADN service area the AMF 203 determines UE presence in the LADN service area and forwards the request and an indication of the UE presence in the LADN service area to the SMF 205 if the requested DNN is configured at the AMF as a LADN DNN.

When receiving an SM request corresponding an LADN from the AMF 203 the SMF 205 determines whether the UE 201 is inside the LADN service area based on the indication (i.e. "UE Presence in LADN service area") received from the AMF 203. If the SMF 205 does not receive the indication, the SMF 205 considers that the UE 201 is outside of the LADN service area. In that case, the SMF 201 rejects/releases the request/PDU Session.

When the SMF 205 receives a request for PDU Session Establishment with the LADN DNN, it subscribes to "UE mobility event notification" for reporting UE presence in Area of Interest by providing the LADN DNN to the AMF 203. This is for example useful if a UE has moved out of the LADN Service area during IDLE mode. In that case, the SMF releases a PDU Session for that LADN.

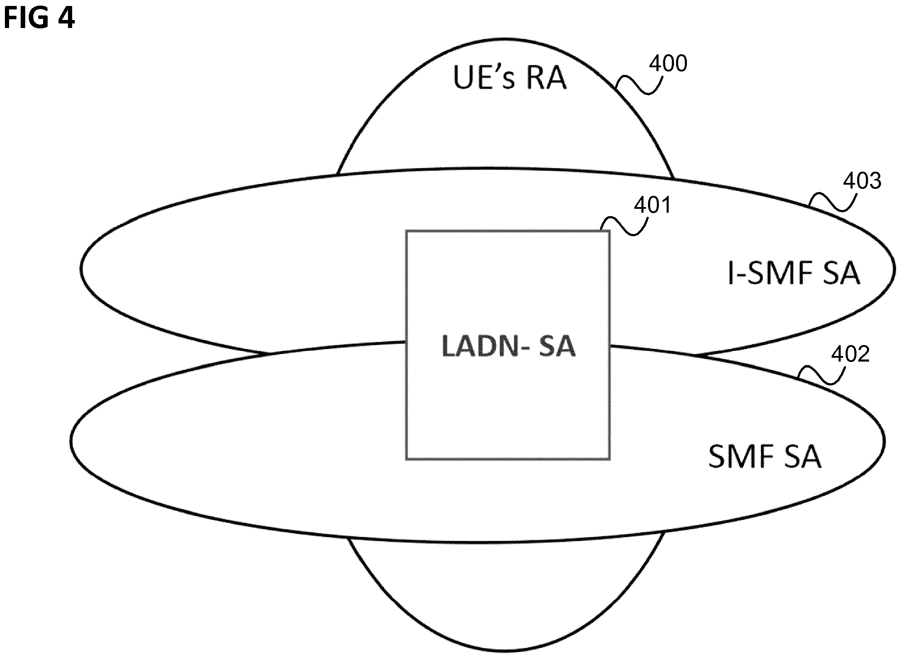

A LADN service area is 302, 303, 304 does not necessarily map to an SMF Service Area. Thus, it may in particular occur that the service area of a LADN (or LADN service) spans over an I-SMF service area and an SMF service area as illustrated in figure 4.

Figure 4 shows a registration area 400 of a UE, e.g. corresponding to UE 201, which includes the service area 401 of an LADN which is partially located in the service area 402 of an SMF, e.g. corresponding to SMF 205, and partially located in the service area 403 of an I-SMF, e.g. corresponding to I-SMF 213.

The UE may in particular move between the I-SMF SA 403 and the SMF SA while staying within the LADN-SA 401.

According to various embodiments, approaches for the network behaviour in such a scenario are provided. For example, an AMF behaviour will be described for the case that a UE 201 sends a PDU Session Establishment Request (i.e. triggers PDU session establishment or Service Request) in an I-SMF SA 403 but the LADN UPF, e.g. corresponding to UPF 205, is served by the SMF 205.

It should be noted that an AMF 203 may, during service request procedure, send an LADN rejection cause (MM Cause #43) specifying that an LADN not available. This 5GMM cause is sent to the UE 201 if the user-plane resources of the PDU session are not established when the UE 201 is located outside the LADN service area.

Similarly, an SMF 205 may send an LADN rejection cause (SM Cause #46) to a UE 201 specifying that the UE 201 is out of the LADN service area in response to a PDU Session Establishment or modification request. This 5GSM cause is used by the network to indicate that the UE is out of the LADN service area.

However, since these two LADN rejection causes are provided for the case that the UE is outside the LADN service area 401, they may not be used to address the scenario as described above that the UE stays in the LADN-SA 401 but moves between the I-SMF SA 403 and the SMF SA (and for example triggers PDU session establishment when in the I-SMF SA 403).

It should further be noted that when an SMF 205 serving an LADN has an SMF Service Area that includes a LADN Service Area this implies that an I-SMF will not be selected for the establishment of a PDU Session where the DNN of the PDU Session corresponds to a LADN. If a UE has a PDU session the SMF 205 shall release the PDU session if the DNN of the PDU Session corresponds to the LADN and an I-SMF 213 is inserted. This covers the case that a UE 201 moves out of an SMF Service Area and an I-SMF 213 is inserted. If the PDU Session was maintained with the I-SMF 213, the SMF 205 may not be able to enforce the LADN Service control. For example, the SMF 205 would not be notified in case of a Service Request by the UE. This approach addresses the case of a UE originated Service Request when a PDU session is already established but does not address the handling of a PDU Session Establishment request.

A UE 201 may trigger PDU Session establishment by sending a PDU Session Establishment Request via the RAN 202 to the AMF 203. The UE 201 shall not trigger a PDU Session establishment for a PDU Session corresponding to a LADN when the UE 201 is outside the area of availability of the LADN. According to 3GPP Release 15, where an SMF 205 serves a whole PLMN, it does not make sense to reject a Session Establishment. In particular, in a scenario as described above where the UE moves within the LADN-SA 401 but moves between the I-SMF SA 403 and the SMF SA triggers PDU session establishment when in the I-SMF SA 403 the SMF would not reject the LADN PDU Session Establishment Request according to Release 15. However, as mentioned above, this may cause problems since the I-SMF 213 needs to serve the UE and the SMF 205 may not be able to enforce the LADN Service control.

In the following, approaches are described for handling a PDU establishment request by a UE in a scenario as illustrated in figure 4.

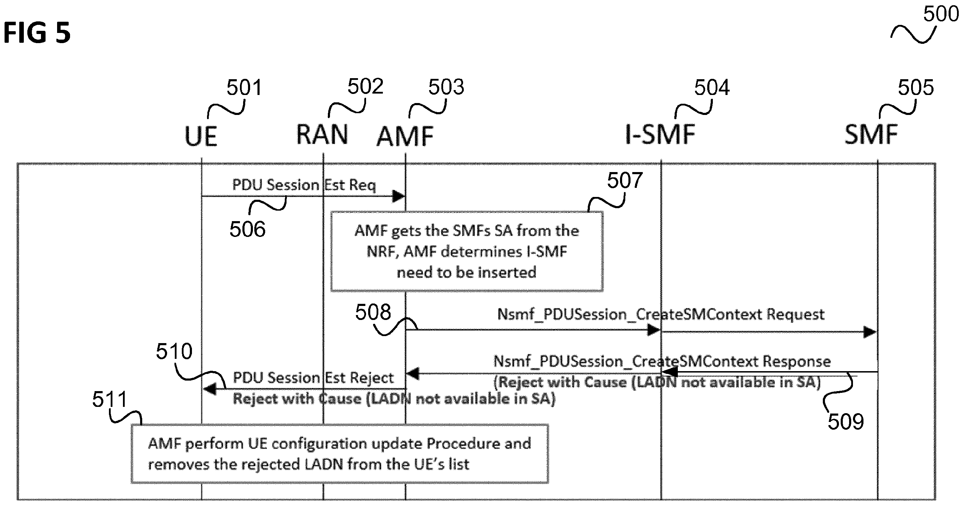

Figure 5 shows a message flow diagram 500 illustrating the handling of a PDU Session Establishment request according to an embodiment.

The message flow takes place between a UE 501, e.g. corresponding to UE 201, a RAN 502, e.g. corresponding to RAN 202, an AMF 503, e.g. corresponding to AMF 203, an I-SMF 504, e.g. corresponding to I-SMF 213, and an SMF 505, e.g. corresponding to SMF 205.

In 506, the UE 501 sends a PDU Session Establishment request to the AMF 503 via the RAN 502. The PDU Session Establishment request specifies that the PDU Session should be provided by means of the LADN and indicates the UE's location.

In 507, upon reception of the PDU Session Establishment request, the AMF 503 determines the service area of the SMF 205 (e.g. by querying a Network Repository Function or local configured in the AMF by O&M system). It is assumed that the UE is located in the service area of the I-SMF 403, i.e. that the UE 501 is located in a part of the LADN which requires the I-SMF 505 to serve the UE 501. Accordingly, the AMF 503 determines that the I-SMF 505 needs to be selected (as SMF for the UE) and, in 508, forwards the UE's PDU Session Establishment request to the I-SMF 505 and the address of the SMF 504 to establish an N16a interface (according to ETSUN).

Based on operator's policy, the SMF 505 may accept the request (and follow standard procedure in this case without changes) or reject the PDU Session Request.

It is assumed that, e.g. according to the policy of the operator of the radio communication system 200, the SMF rejects the request and sends, in 509, a response message to the AMF 503 (via the I-SMF 504) including an SM rejection cause code (e.g. "LADN service is not able to service at this time").

In 510, based on the rejection, the AMF 503 forwards the SM reject (by SMF 505) to the UE 501 via RAN 502 and includes the SM rejection cause code. Alternatively, the SMF (505) sends the PDU Session rejection with a reason (e.g. SMF cannot serve the LADN in UE's location) to the AMF (503), then AMF 503 determines a MM rejection cause code (e.g. "LADN not available at this time") and sends is to the UE.

In 511, the AMF 503 may optionally perform a UE Configuration Update Procedure to updates LADN information in the UE. For example, it may remove the rejected LADN (possibly multiple rejected LADNs) from the UE's list of available LADNs.

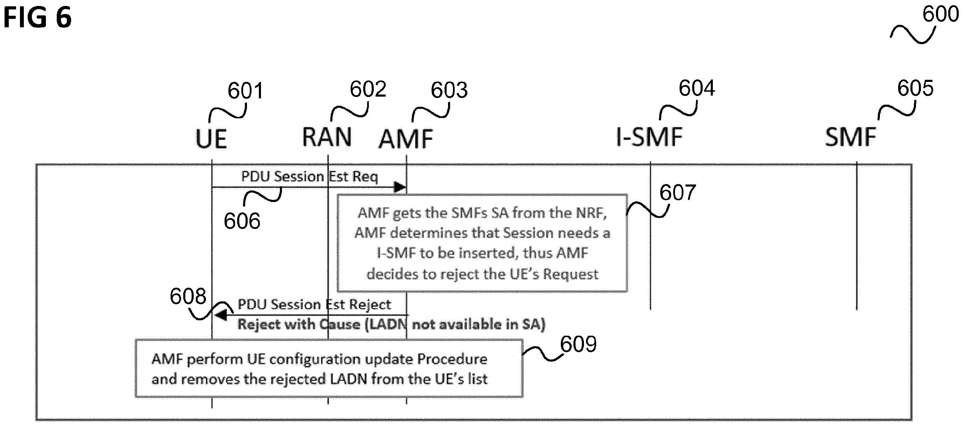

Figure 6 shows a message flow diagram 600 illustrating the handling of a PDU Session Establishment request according to another embodiment.

Similarly to figure 5, the message flow takes place between a UE 601, e.g. corresponding to UE 201, a RAN 602, e.g. corresponding to RAN 202, an AMF 603, e.g. corresponding to AMF 203, an I-SMF 604, e.g. corresponding to I-SMF 213, and an SMF 605, e.g. corresponding to SMF 205.

In 606, the UE 601 sends a PDU Session Establishment request to the AMF 603 via the RAN 602. The PDU Session Establishment request specifies that the PDU Session should be provided by means of the LADN and indicates the UE's location.

In 607, upon reception of the PDU Session Establishment request, the AMF 603 determines the service area of the SMF 205 (e.g. by querying a Network Repository Function or locally configured). It is assumed that the UE is located in the service area of the I-SMF 403, i.e. that the UE 601 is located in a part of the LADN which requires the I-SMF 605 to serve the UE 601.

Accordingly, the AMF 603 determines that the I-SMF 605 needs to be selected as SMF for the UE (according to ETSUN) .

Based on a policy configured in the AMF 603 (e.g. a policy specifying that for a LADN Session the I-SMF 605 shall not be inserted), the AMF 603 decides to reject the PDU Session Request.

Accordingly, in 608, the AMF 603 sends a reject message to the UE 601 with a rejection cause code (e.g. "LADN not available").

In 609, the AMF 603 may optionally perform a UE Configuration Update Procedure to update LADN information in the UE. For example, it may remove the rejected LADN (possibly multiple rejected LADNs) from the UE's list of available LADNs.

The examples of figure 5 and 6 relate to a PDU establishment request. However, they may analogously applied to other requests by a UE for a communication service. Similarly to the PDU Session Establishment procedure, the AMF 603 or the SMF 505 may decide to reject the request.

For example, in context of a PDU Session Modification Procedure or Service Request Procedure, if a UE requests a PDU Session Modification, then an AMF or an SMF can reject the request and send a rejection cause code.

Similarly to the approach of figure 5, in case of SMF rejection (i.e. rejection by the SMF), the SMF can notify the rejection to the AMF and the AMF can reject the UE's request with a MM cause rejection code. The AMF can operate according to this mechanism in a Service Request procedure.

After the rejection, as described with reference to figures 5 and 6, the AMF can optionally trigger a UE Configuration Update procedure.

As another example for a service request by the UE in the scenario of figure 4, in case of a handover e.g. Xn handover either AMF or SMF can reject the path switch of a PDU Session. It should be noted that a handover can be seen as a request for a communication service provided by the handover target radio cell (e.g. a session continued via the target cell).

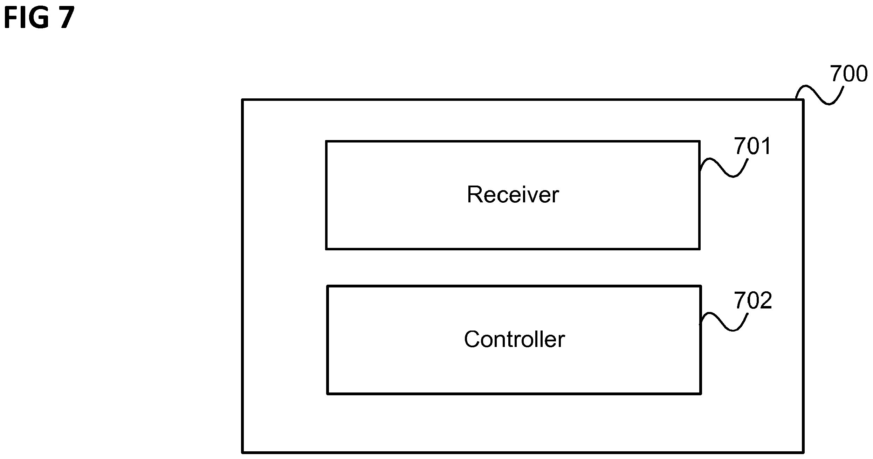

In summary, according to various embodiments, a communication network component is provided as illustrated in figure 7.

Figure 7 shows communication network component 700 according to an embodiment.

The communication network component includes a receiver 701 configured to receive a request for a communication service of a local area data network from a mobile terminal (e.g. UE) .

The communication network component further includes a controller 702 configured to reject the request if the mobile terminal is located in a part of the local area data network that requires an intermediate session management function to serve the mobile terminal.

According to various embodiments, in other words, the network side of a radio communication system (e.g. PLMN) determines whether a mobile terminal that requests a communication service is located in the area of a local area data network (e.g. an LADN according to 3GPP) that is served by an intermediate SMF, i.e. falls in the service area of an intermediate SMF (e.g. an I-SMF according to ETSUN) . If that is the case, the network side (e.g. AMF or SMF) may decide, e.g. based on a policy of an operator of the PLMN, to reject the request.

This in particular allows handling LADN sessions in a scenario where an I-SMF may be inserted for a PDU Session, e.g. for mobility reasons.

The rejection of the service request in case that the mobile terminal is located in a part of the local area data network that requires an intermediate session management function to serve the mobile terminal can be seen as to be based on the idea that a LADN is a more local service which does not require Session continuity.

According to a further example, a communication network component is provided configured, upon a request by a mobile terminal to be provided for a communication service in a local area data network, to check whether the mobile terminal is located in a part of the local area data network overlapping with a service area of an intermediate session management function and to reject the request if the mobile terminal is located in a part of the local area data network overlapping with a service area of an intermediate session management function.

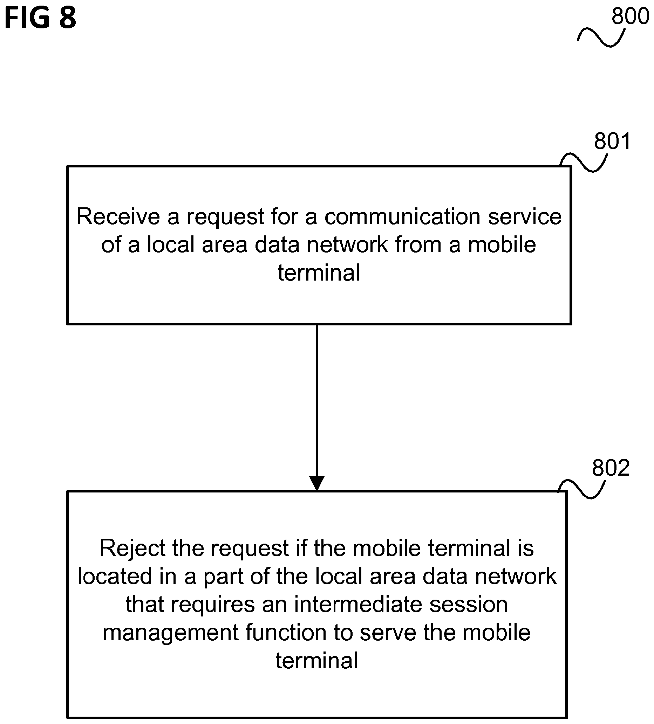

The communication network component 700 (or multiple components of a communication network) for example carry out a method as illustrated in figure 8.

Figure 8 shows a flow diagram 800 illustrating a method for handling a communication request (from a mobile terminal).

In 801, a request for a communication service of a local area data network from a mobile terminal is received.

In 802, the request is rejected if the mobile terminal is located in a part of the local area data network that requires an intermediate session management function to serve the mobile terminal.

The communication network component (e.g. the receiver and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning of the claims are therefore intended to be embraced.

## Claims

1. A communication network component (203, 205) comprising:
a receiver (701) configured to receive a request for a communication service of a local area data network from a mobile terminal (201), wherein the request is a request for establishment of a communication session; and
a controller (702) configured to reject the request by sending a session establishment rejection to the mobile terminal (201) if the mobile terminal (201) is located in a part of the local area data network that requires an intermediate session management function (213) to serve the mobile terminal (201),
wherein the local area data network comprises at least a part served by a session management function (205) and a part served by the intermediate session management function (213) to serve the mobile terminal (201).

2. The communication network component (203, 205) according to claim 1, wherein the controller (702) is configured to initiate providing the service to the mobile terminal (201) if the mobile terminal (201) is not located in a part of the local area data network that requires an intermediate session management function (213) to serve the mobile terminal (201).

3. The communication network component (203, 205) according to claim 1 or 2, comprising a determiner configured to determine whether the mobile terminal (201) is located in a part of the local area data network that requires an intermediate session management function (213) to serve the mobile terminal (201).

4. The communication network component (203, 205) according to claim 3, wherein the determiner is configured to determine whether the mobile terminal (201) is located in a part of the local area data network that requires an intermediate session management function (213) to serve the mobile terminal (201) based on a service area of the session management function (402).

5. The communication network component (203, 205) according to claim 3 or 4, wherein the communication network component (203, 205) is the session management function (205) or an access and mobility management function (203).

6. The communication network component (203, 205) according to claim 3 or 4, wherein the communication network component (203, 205) is an access and mobility management function (203) and the controller (702) is configured to reject the request in response to a rejection of the request by the session management function (205).

7. The communication network component (203) of claim 6, wherein the access and mobility management function (203) is configured to receive a session management rejection reason from the session management function (205) and the access and mobility management function (203) is configured to determine a mobility management rejection reason and transmit it to the mobile terminal (201).

8. The communication network component (203, 205) according to any one of claims 1 to 7, wherein the communication network component (203, 205) is an access and mobility management function (203) and comprises a transmitter configured to transmit the request to an intermediate session management function (213) configured to serve the part of the local area data network that requires an intermediate session management function (213).

9. The communication network component (203, 205) according to any one of claims 1 to 8, wherein the communication network component (203, 205) is an access and mobility management function (203), comprises a determiner configured to determine whether the mobile terminal is located in a part of the local area data network that requires an intermediate session management function (213) to serve the mobile terminal (201) and the controller (702) is configured to reject the request in response to the determination by the determiner that the mobile terminal (201) is located in a part of the local area data network that requires an intermediate session management function (213) to serve the mobile terminal (201).

10. The communication network component (203, 205) according to any one of claims 1 to 9, comprising a transmitter configured to transmit a rejection cause to the mobile terminal (201) if the mobile terminal (201) is located in a part of the local area data network that requires an intermediate session management function (213) to serve the mobile terminal (201).

11. The communication network component (203, 205) according to claim 10, wherein the rejection cause specifies that the mobile terminal (201) is located in a session management function service area in which the local area data network is not available.

12. The communication network component (203, 205) according to any one of claims 1 to 11, comprising a transmitter configured to update a configuration of the mobile terminal (201) to exclude the local area data network from a list of available local area data networks if the mobile terminal (201) is located in a part of the local area data network that requires an intermediate session management function (213) to serve the mobile terminal (201).

13. A method for handling a service request comprising:
receiving a request for a communication service of a local area data network from a mobile terminal (201), wherein the request is a request for establishment of a communication session; and
rejecting the request by sending a session establishment rejection to the mobile terminal (201) if the mobile terminal (201) is located in a part of the local area data network that requires an intermediate session management function (213) to serve the mobile terminal (201),
wherein the local area data network comprises at least a part served by a session management function (205) and a part served by the intermediate session management function (213) to serve the mobile terminal (201).

## Patentansprüche

1. Eine Kommunikationsnetzwerkkomponente (203, 205), aufweisend:
einen Empfänger (701), der so eingerichtet ist, dass er eine Anforderung für einen Kommunikationsdienst eines lokalen Datennetzes von einem mobilen Endgerät (201) empfängt, wobei die Anforderung eine Anforderung zum Aufbau einer Kommunikationssitzung ist; und
eine Steuereinrichtung (702), die so eingerichtet ist, dass sie die Anforderung zurückweist, indem sie eine Sitzungsaufbau-Ablehnung an das mobile Endgerät (201) sendet, wenn sich das mobile Endgerät (201) in einem Teil des lokalen Datennetzes befindet, der eine Zwischensitzungsverwaltungsfunktion (213) erfordert, um das mobile Endgerät (201) zu versorgen,
wobei das lokale Datennetz mindestens einen Teil, der von einer
Sitzungsverwaltungsfunktion (205) versorgt wird, und einen Teil, der von der Zwischensitzungsverwaltungsfunktion (213) versorgt wird, um das mobile Endgerät (201) zu versorgen, aufweist.

2. Die Kommunikationsnetzwerkkomponente (203, 205) nach Anspruch 1, wobei die Steuereinrichtung (702) so eingerichtet ist, dass sie die Bereitstellung des Dienstes für das mobile Endgerät (201) einleitet, wenn sich das mobile Endgerät (201) nicht in einem Teil des lokalen Datennetzes befindet, der eine Zwischensitzungsverwaltungsfunktion (213) zur Versorgung des mobilen Endgeräts (201) erfordert.

3. Die Kommunikationsnetzwerkkomponente (203, 205) nach Anspruch 1 oder 2, die eine Bestimmungseinrichtung aufweist, die so eingerichtet ist, dass sie bestimmt, ob sich das mobile Endgerät (201) in einem Teil des lokalen Datennetzes befindet, der eine Zwischensitzungsverwaltungsfunktion (213) zur Versorgung des mobilen Endgerätes (201) erfordert.

4. Die Kommunikationsnetzwerkkomponente (203, 205) nach Anspruch 3, wobei die Bestimmungseinrichtung so eingerichtet ist, dass sie auf der Grundlage eines Versorgungsbereichs der Sitzungsverwaltungsfunktion (402) bestimmt, ob sich das mobile Endgerät (201) in einem Teil des lokalen Datennetzes befindet, der eine Zwischensitzungsverwaltungsfunktion (213) zur Versorgung des mobilen Endgeräts (201) erfordert.

5. Die Kommunikationsnetzwerkkomponente (203, 205) nach Anspruch 3 oder 4, wobei die Kommunikationsnetzwerkkomponente (203, 205) die Sitzungsverwaltungsfunktion (205) oder eine Zugangs- und Mobilitätsverwaltungsfunktion (203) ist.

6. Die Kommunikationsnetzwerkkomponente (203, 205) nach Anspruch 3 oder 4, wobei die Kommunikationsnetzwerkkomponente (203, 205) eine Zugangs- und Mobilitätsverwaltungsfunktion (203) ist und die Steuereinrichtung (702) so eingerichtet ist, dass sie die Anforderung als Reaktion auf eine Ablehnung der Anforderung durch die Sitzungsverwaltungsfunktion (205) zurückweist.

7. Die Kommunikationsnetzwerkkomponente (203) nach Anspruch 6, wobei die Zugangs- und Mobilitätsverwaltungsfunktion (203) so eingerichtet ist, dass sie einen Sitzungsverwaltungsablehnungsgrund von der Sitzungsverwaltungsfunktion (205) empfängt, und die Zugangs- und Mobilitätsverwaltungsfunktion (203) so eingerichtet ist, dass sie einen Mobilitätsverwaltungsablehnungsgrund bestimmt und diesen an das mobile Endgerät (201) übermittelt.

8. Die Kommunikationsnetzwerkkomponente (203, 205) nach einem der Ansprüche 1 bis 7, wobei die Kommunikationsnetzwerkkomponente (203, 205) eine Zugangs- und Mobilitätsverwaltungsfunktion (203) ist und einen Sender aufweist, der so eingerichtet ist, dass er die Anforderung an eine Zwischensitzungsverwaltungsfunktion (213) sendet, die so eingerichtet ist, dass sie den Teil des lokalen Datennetzes versorgt, der eine Zwischensitzungsverwaltungsfunktion (213) erfordert.

9. Die Kommunikationsnetzwerkkomponente (203, 205) nach einem der Ansprüche 1 bis 8, wobei die Kommunikationsnetzwerkkomponente (203, 205) eine Zugangs- und Mobilitätsverwaltungsfunktion (203) ist, eine Bestimmungseinrichtung aufweist, die eingerichtet ist, um zu bestimmen, ob sich das mobile Endgerät in einem Teil des lokalen Datennetzes befindet, der eine Zwischensitzungs-Verwaltungsfunktion (213) erfordert, um das mobile Endgerät (201) zu versorgen, und die Steuereinrichtung (702) eingerichtet ist, um die Anforderung in Reaktion auf die Bestimmung durch die Bestimmungseinrichtung, dass sich das mobile Endgerät (201) in einem Teil des lokalen Datennetzes befindet, der eine Zwischensitzungs-Verwaltungsfunktion (213) erfordert, um das mobile Endgerät (201) zu versorgen, zurückzuweisen.

10. Die Kommunikationsnetzwerkkomponente (203, 205) nach einem der Ansprüche 1 bis 9, die einen Sender aufweist, der so eingerichtet ist, dass er eine Ablehnungsursache an das mobile Endgerät (201) sendet, wenn sich das mobile Endgerät (201) in einem Teil des lokalen Datennetzes befindet, der eine Zwischensitzungsverwaltungsfunktion (213) zur Versorgung des mobilen Endgerätes (201) erfordert.

11. Die Kommunikationsnetzwerkkomponente (203, 205) nach Anspruch 10, wobei die Ablehnungsursache angibt, dass sich das mobile Endgerät (201) in einem Sitzungsverwaltungsfunktionsversorgungsbereich befindet, in dem das lokale Datennetz nicht verfügbar ist.

12. Die Kommunikationsnetzwerkkomponente (203, 205) nach einem der Ansprüche 1 bis 11, die einen Sender aufweist, der so eingerichtet ist, dass er eine Konfiguration des mobilen Endgeräts (201) aktualisiert, um das lokale Datennetz aus einer Liste verfügbarer lokaler Datennetze auszuschließen, wenn sich das mobile Endgerät (201) in einem Teil des lokalen Datennetzes befindet, der eine Zwischensitzungsverwaltungsfunktion (213) zur Versorgung des mobilen Endgeräts (201) erfordert.

13. Ein Verfahren zur Behandlung einer Dienstanforderung, aufweisend:
Empfangen einer Anforderung für einen Kommunikationsdienst eines lokalen Datennetzes von einem mobilen Endgerät (201), wobei die Anforderung eine Anforderung zum Aufbau einer Kommunikationssitzung ist; und
Ablehnen der Anforderung durch Senden einer Sitzungsaufbau-Ablehnung an das mobile Endgerät (201), wenn sich das mobile Endgerät (201) in einem Teil des lokalen Datennetzes befindet, der eine Zwischensitzungsverwaltungsfunktion (213) erfordert, um das mobile Endgerät (201) zu versorgen,
wobei das lokale Datennetz mindestens einen Teil aufweist, der von einer Sitzungsverwaltungsfunktion (205) versorgt wird, und einen Teil, der von der Zwischensitzungsverwaltungsfunktion (213) versorgt wird, um das mobile Endgerät (201) zu versorgen.

## Revendications

1. Composant de réseau de communication (203, 205) comprenant :
un récepteur (701) configuré pour recevoir une demande de service de communication d'un réseau de données local d'un terminal mobile (201), dans lequel la demande est une demande d'établissement d'une session de communication ; et
un dispositif de commande (702) configuré pour rejeter la demande en envoyant un rejet d'établissement de session au terminal mobile (201) si le terminal mobile (201) est situé dans une partie du réseau de données local qui nécessite une fonction de gestion de session intermédiaire (213) pour desservir le terminal mobile (201),
dans lequel le réseau de données local comprend au moins une partie desservie par une fonction de gestion de session (205) et une partie desservie par la fonction de gestion de session intermédiaire (213) pour desservir le terminal mobile (201).

2. Composant de réseau de communication (203, 205) selon la revendication 1, dans lequel le dispositif de commande (702) est configuré pour démarrer la fourniture du service au terminal mobile (201) si le terminal mobile (201) n'est pas situé dans une partie du réseau de données local qui nécessite une fonction de gestion de session intermédiaire (213) pour desservir le terminal mobile (201).

3. Composant de réseau de communication (203, 205) selon la revendication 1 ou 2, comprenant un déterminant configuré pour déterminer si le terminal mobile (201) est situé dans une partie du réseau de données local qui nécessite une fonction de gestion de session intermédiaire (213) pour desservir le terminal mobile (201).

4. Composant de réseau de communication (203, 205) selon la revendication 3, dans lequel le déterminant est configuré pour déterminer si le terminal mobile (201) est situé dans une partie du réseau de données local qui nécessite une fonction de gestion de session intermédiaire (213) pour desservir le terminal mobile (201) sur la base d'une zone de service de la fonction de gestion de session (402).

5. Composant de réseau de communication (203, 205) selon la revendication 3 ou 4, dans lequel le composant de réseau de communication (203, 205) est la fonction de gestion de session (205) ou une fonction de gestion d'accès et de mobilité (203).

6. Composant de réseau de communication (203, 205) selon la revendication 3 ou 4, dans lequel le composant de réseau de communication (203, 205) est une fonction de gestion d'accès et de mobilité (203) et le dispositif de commande (702) est configuré pour rejeter la demande en réponse à un rejet de la demande par la fonction de gestion de session (205).

7. Composant de réseau de communication (203) selon la revendication 6, dans lequel la fonction de gestion d'accès et de mobilité (203) est configurée pour recevoir une raison de rejet de gestion de session de la fonction de gestion de session (205) et la fonction de gestion d'accès et de mobilité (203) est configurée pour déterminer une raison de rejet de gestion de mobilité et la transmettre au terminal mobile (201).

8. Composant de réseau de communication (203, 205) selon l'une quelconque des revendications 1 à 7, dans lequel le composant de réseau de communication (203, 205) est une fonction de gestion d'accès et de mobilité (203) et comprend un émetteur configuré pour transmettre la demande à une fonction de gestion de session intermédiaire (213) configurée pour desservir la partie du réseau de données local qui nécessite une fonction de gestion de session intermédiaire (213).

9. Composant de réseau de communication (203, 205) selon l'une quelconque des revendications 1 à 8, dans lequel le composant de réseau de communication (203, 205) est une fonction de gestion d'accès et de mobilité (203), comprend un déterminant configuré pour déterminer si le terminal mobile est situé dans une partie du réseau de données local qui nécessite une fonction de gestion de session intermédiaire (213) pour desservir le terminal mobile (201) et le dispositif de commande (702) est configuré pour rejeter la demande en réponse à la détermination par le déterminant que le terminal mobile (201) est situé dans une partie du réseau de local qui nécessite une fonction de gestion de session intermédiaire (213) pour desservir le terminal mobile (201).

10. Composant de réseau de communication (203, 205) selon l'une quelconque des revendications 1 à 9, comprenant un émetteur configuré pour transmettre une cause de rejet au terminal mobile (201) si le terminal mobile (201) est situé dans une partie du réseau de données local qui nécessite une fonction de gestion de session intermédiaire (213) pour desservir le terminal mobile (201).

11. Composant de réseau de communication (203, 205) selon la revendication 10, dans lequel la cause de rejet spécifie que le terminal mobile (201) est situé dans une zone de service de fonction de gestion de session dans laquelle le réseau de données local n'est pas disponible.

12. Composant de réseau de communication (203, 205) selon l'une quelconque des revendications 1 à 11, comprenant un émetteur configuré pour mettre à jour une configuration du terminal mobile (201) pour exclure le réseau de données local d'une liste de réseaux de données locaux disponibles si le terminal mobile (201) est situé dans une partie du réseau de données local qui nécessite une fonction de gestion de session intermédiaire (213) pour desservir le terminal mobile (201).

13. Procédé de traitement d'une demande de service comprenant : la réception d'une demande d'un service de communication d'un réseau de données local à partir d'un terminal mobile (201), dans lequel la demande est une demande d'établissement d'une session de communication ; et
le rejet de la demande en envoyant un rejet d'établissement de session au terminal mobile (201) si le terminal mobile (201) est situé dans une partie du réseau de données local qui nécessite une fonction de gestion de session intermédiaire (213) pour desservir le terminal mobile (201), dans lequel le réseau de données local comprend au moins une partie desservie par une fonction de gestion de session (205) et une partie desservie par la fonction de gestion de session intermédiaire (213) pour desservir le terminal mobile (201).
